(19) Europäisches Patentamt
European Patent Office
Office européen des brevets

(11) **EP 3 407 266 B1**

(12) **EUROPEAN PATENT SPECIFICATION**

(45) Date of publication and mention
of the grant of the patent:
**09.08.2023 Bulletin 2023/32**

(51) International Patent Classification (IPC):
**G06N 3/045** *(2023.01)* **G06N 3/048** *(2023.01)*
**G06N 3/063** *(2023.01)* **G06N 3/082** *(2023.01)*

(21) Application number: **16885910.6**

(22) Date of filing: **06.04.2016**

(52) Cooperative Patent Classification (CPC):
**G06N 3/082; G06N 3/045; G06N 3/048;**
**G06N 3/063;** G06F 2207/4824

(86) International application number:
**PCT/CN2016/078545**

(87) International publication number:
**WO 2017/124646 (27.07.2017 Gazette 2017/30)**

(54) **ARTIFICIAL NEURAL NETWORK CALCULATING DEVICE AND METHOD FOR SPARSE CONNECTION**

BERECHNUNGSVORRICHTUNG FÜR KÜNSTLICHES NEURONALES NETZ UND VERFAHREN FÜR SPÄRLICHER VERBINDUNG

DISPOSITIF ET PROCÉDÉ DE CALCUL DE RÉSEAU NEURONAL ARTIFICIEL POUR CONNEXION ÉPARSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2016 CN 201610039162**

(43) Date of publication of application:
**28.11.2018 Bulletin 2018/48**

(73) Proprietor: **Cambricon Technologies Corporation Limited**
**Beijing 100191 (CN)**

(72) Inventors:
• **ZHANG, Shijin**
**Beijing 100191 (CN)**
• **GUO, Qi**
**Beijing 100191 (CN)**
• **CHEN, Yunji**
**Beijing 100191 (CN)**
• **CHEN, Tianshi**
**Beijing 100191 (CN)**

(74) Representative: **Huang, Liwei**
**Cäcilienstraße 12**
**40597 Düsseldorf (DE)**

(56) References cited:
**CN-A- 102 201 188      CN-A- 104 077 595**
**CN-A- 104 200 224      US-A- 5 517 596**
**US-A- 6 148 104        US-A1- 2015 100 530**
**US-A1- 2015 269 479    US-B1- 9 015 093**

## Description

TECHNICAL FIELD

The present invention relates to the technical field of data processing, more specifically, relating to a calculating device for a sparsely connected artificial neural network, and a sparse multiple-layer artificial neural network operation device.

BACKGROUND

Artificial Neural Networks (ANNs), or Neural Networks (NNs) for short, are algorithmic mathematical models imitating the behavior characteristics of animal neural networks and performing the distributed concurrent information processing. Depending on complexity of a system, such networks adjust interconnection among a great number of internal nodes, thereby achieving the purpose of information processing. The algorithm used by NNs is vector multiplication, and widely adopts sign functions and various approximations thereof.

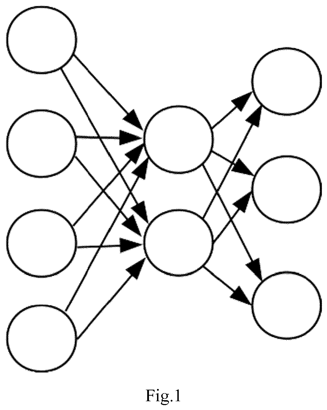

Just as neural networks in the brain, NNs consist of some interconnected nodes. As shown in Fig. 1, each circle represents a neuron, and each arrow represents a connection between two neurons, which is also known as a weight.

The calculation formula of a neuron can be briefly described as $y=f(\sum_{i=0}^{n} w_i * x_i)$, wherein x represents all input neurons connected to the output neurons, w represents corresponding weight values between x and the output neurons, and f(x) is a nonlinear function, usually known as an activation function including those commonly used functions such as $\frac{1}{1+e^{-x}}$ and $\frac{e^x-e^{-x}}{e^x+e^{-x}}$.

NNs are widely applied to a variety of applications, such as computational vision, voice recognition and natural language processing. In recent years, the scale of NNs has been growing. In 1998, the scale of Lecun neural network for handwriting characters recognition is less than 1M weight values; while in 2012, the scale of krizhevsky for participating ImageNet competition is 60M weight values. US 5517596 relates to a learning machine synapse processor system apparatus.

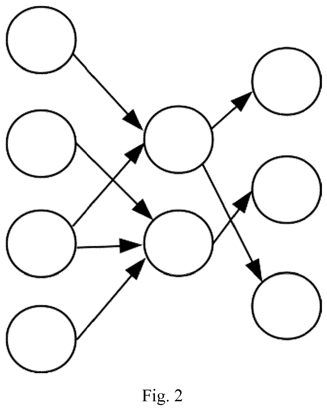

A neural network is an application with high amount of calculation and high memory access. The more weight values there are, the more amounts of calculation and memory access. In order to decrease the account of calculation and the number of weight values thereby reducing memory access, a sparsely connected neural network is designed, just as illustrated in Fig. 2.

As the amount of calculation and the amount of memory access of NNs dramatically increase, a general-purpose processor is usually adopted in the prior art to calculate a sparse artificial neural network. With regard to the general-purpose processor, the input neurons, output neurons and weights are respectively stored in three arrays, meanwhile there is an index array for storing the connection relation between each output and input connection. At the time of calculating, a major operation is a multiplication of a neuron and a weight value. However, since weight values do not correspond to neurons one-by-one, each calculation needs to search a weight value corresponding to a neuron through the index array. Since the general-purpose processor is weak in both calculation and memory access, demands of NNs cannot be satisfied. Nevertheless, when multiple general-purpose processors work concurrently, intercommunication among them becomes a performance bottleneck again. When calculating a neural network after pruning, each multiplication operation needs to re-search positions corresponding to the weight values in the index array, which increases additional calculation amounts and memory access overhead. Thus, NNs calculation is time-consuming and power-consuming. General-purpose processors need to decode an operation of a multiple-layer artificial neural network into a long sequence of operations and memory access instructions, and front-end decoding brings about a larger overhead.

Another known method to support the operation and training algorithm of a sparsely connected artificial neural network is to use a graphics processing unit (GPU). In such method are used a general-purpose register file and a general-purpose stream processing unit to execute a universal SIMD instruction to support the aforementioned algorithm. Since GPU is a device specially for executing graph and image operations as well as scientific calculation, and fails to specially support sparse artificial neural network operations, GPU remains in need of a great amount of front-end decoding to execute sparse artificial neural network operations, thus producing plenty of additional overheads. Besides, since GPU only contains rather small on-chip caching, then model data (weight values) of a multiple-layer artificial neural network has to be repeatedly moved from outside the chip, and off-chip bandwidth becomes a main performance bottleneck while producing huge power consumption.

SUMMARY

The present invention is defined according to the appended claims.

We provide a calculating device for a sparsely connected artificial neural network, comprising:

a mapping unit for converting input data into a storage mode in which input neurons have one-to-one correspondence with weight values, and storing the same in a storage device and/or cache;

a storage device used for storing data and instructions;

an operation unit for executing a corresponding operation on said data according to the instructions stored in said storage device, wherein said operation unit mainly performs a three-step operation: step 1, multiply the input neurons and the weight values; step 2, execute an adder tree operation for performing, by means of an adder tree, a stage-by-stage summation of the weighted output neurons processed by step 1 or add a bias to the output neurons to obtain biased output neurons; and step 3, execute an activation function operation, to obtain final output neurons.

Wherein, the one-to-one correspondence in said mapping unit is expressed as:

the first instance:

using 1 to represent connection, 0 to represent connectionless, and a character string of 0 and 1 formed with the connection status between each output and all inputs to represent connection relations of the output; or

using 1 to represent connection, 0 to represent connectionless, and a character string of 0 and 1 formed with the connection status between each input and all outputs to represent connection relations of the input;

the second instance:
using a distance from a position of a first connection of an output to a first input neuron, a distance from a second input neuron of said output to a previous input neuron, a distance from a third input neuron of said output to a previous input neuron ... in a similar fashion, until all inputs of said output are exhausted, so as to represent connection relations of said output.

Yet not claimed, we provide a calculating method for a sparsely connected artificial neural network, comprising:

step 1, convert input data into a storage mode in which input neurons have one-to-one correspondence with weight values, wherein, the correspondence is expressed as:

the first instance:

using 1 to represent connection, 0 to represent connectionless, and a character string of 0 and 1 formed with the connection status between each output and all inputs to represent connection relations of the output; or

using 1 to represent connection, 0 to represent connectionless, and a character string of 0 and 1 formed with the connection status between each input and all outputs to represent connection relations of the input;

the second instance:

using a distance from a position of a first connection of an output to a first input neuron, a distance from a second input neuron of said output to a previous input neuron, a distance from a third input neuron of said output to a previous input neuron ... in a similar fashion, until all inputs of said output are exhausted, so as to represent connection relations of said output;

Step 2, multiply the input neurons and weight values;

Step 3, execute an adder tree operation, by performing, by means of an adder tree, a stage-by-stage summation of the weighted output neurons processed in Step 1, or add a bias to the output neurons to obtain biased output neurons; and

Step 4, execute an activation function operation to obtain final output neurons, wherein said activation function is sigmoid function, tanh function or ReLU function.

Based on the above technical solution, the calculating device for the artificial neural network according to the present invention have the following beneficial effects:

(1) By adopting special SIMD instructions and a customized operation unit with regard to a sparse multiple-layer artificial neural network operation, the present invention can solve problems that operation performance of a CPU and a GPU is insufficient, and an overhead of front end decoding is large, and effectively improve support of a multi-layer artificial neural network operation algorithm;

(2) By adopting special on-chip cache with regard to a sparse multiple-layer artificial neural network operation, the present invention can fully exploit the reusability of input neurons and weight value data, avoid repeatedly reading such data from the memory so as to reduce memory access bandwidth, and avoid the problem that the memory bandwidth becomes a bottleneck of a multi-layer artificial neural network operation and training algorithm performance of the multi-layer artificial neural network operation.

BRIEF DESCRIPTION OF THE DRAWINGS

Fig. 1 is a structure diagram of nodes of a neural network;

Fig. 2 is a structure diagram of nodes of a sparsely connected neural network;

Fig. 3 is an exemplary block diagram of an overall structure according to one example of the present invention;

Fig. 4 is a structure diagram of nodes of a sparsely connected neural network according to one example of the present invention;

Fig. 5 is a diagram of connection relations of the neural network in Fig. 4;

Fig. 6 is a diagram of connection relations of a sparsely connected neural network according to another example of the present invention;

Fig. 7 is a diagram of a convolution operation according to one example of the present invention;

Fig. 8 illustrates changes of input, output and weight values when the convolutional neural network becomes sparse;

Fig. 9 is a structure diagram of the calculating device of artificial neural network operations according to one example of the present invention;

Fig. 10 is a structure diagram of a mapping unit according to one example of the present invention;

Fig. 11 is a flowchart illustrating a calculation process of artificial neural network operations, which is not yet claimed;

Fig. 12 is a structure diagram of the calculating device of artificial neural network operations according to another example of the present invention;

Fig. 13 is a structure diagram of a mapping unit according to another example of the present invention;

Fig. 14 is a structure diagram of the calculating device of artificial neural network operations according to yet another example, which is not part of the claimed invention;

Fig. 15 is a structure diagram of a mapping unit according to yet another example, which is not part of the claimed invention;

Fig. 16 is a structure diagram of the calculating device of artificial neural network operations according to even yet another example, which is not part of the claimed invention; and

Fig. 17 is a structure diagram of a mapping unit according to the even yet another example, which is not part of the claimed invention.

EXAMPLES

To make the purpose, technical solution and advantages of the present invention more clear and explicit, the following descriptions, in view of specific embodiments, with reference to the accompanying drawings, will further expound the present invention. More specifically, the detailed description and the accompanying drawings disclose a number of examples, aspects and embodiments provided for the understanding of the invention. The invention is disclosed in the passages identified as claimed embodiments, and the relative drawings if any, and its scope is defined uniquely by the appended claims.

We provide a calculating device for a sparsely connected artificial neural network, comprising:

a mapping unit used for converting the input data into a storage mode in which the input neurons have one-to-one correspondence with weight values, and storing the same in a storage device or cache;
a storage device used for storing data and instructions; and
an operation unit used for executing a corresponding operation on the data according to the instructions stored in the storage device. The operation unit mainly performs a three-step operation: step 1, multiply the input neurons and the weight data; step 2, perform an adder tree operation for performing a summation operation on the weighted output neurons obtained in step 1 stage-by-stage by means of the adder tree, or add a bias to the output neurons to obtain the biased output neurons; and step 3, perform an activation function operation, to obtain final output neurons.

Wherein, the one-to-one correspondence in said mapping unit is expressed as:

the first instance:

using 1 to represent connection, 0 to represent connectionless, and a character string of 0 and 1 formed with the connection status between each output and all inputs to represent connection relations of the output; or

using 1 to represent connection, 0 to represent connectionless, and a character string of 0 and 1 formed with the connection status between each input and all outputs to represent connection relations of the input;

the second instance:
using a distance from a position of a first connection of an output to a first input neuron; a distance from a second input neuron of said output to a previous input neuron; the distance from a third input neuron of said output to a previous input neuron ... in a similar fashion, until all inputs of said output are exhausted, so as to represent connection relations of said output.

The calculating device of the artificial neural network further comprises a DMA for performing read-write of data or instructions in said storage device and cache.

The calculating device of the artificial neural network further comprises:

an instruction cache for storing special instructions; and

a control unit for reading the special instructions from said instruction cache and decoding the special instructions into various operation unit instructions.

The calculating device of the artificial neural network further comprises:

an input neuron cache for caching the input neuron data input into said operation unit; and

a weight value cache for caching weight data.

The calculating device for the artificial neural network further comprises:
an output neuron cache for caching output neurons output from said operation unit.

In one embodiment, the mapping unit for converting the input data into a storage mode in which the input neurons have one-to-one correspondence with the weight values, and outputting the same into said input neuron cache and the weight value cache.

Preferably, an activation function executed by said operation unit in Step 3 may be sigmoid function, tanh function or ReLU function.

Yet not claimed, we further disclose a calculating method for artificial neural network operations, comprising steps as below:

Step 1, convert the input data into a storage mode in which the input neurons have one-to-one correspondence with the weight values, wherein said correspondence is expressed as:

the first instance:

using 1 to represent connection, 0 to represent connectionless, and a character string of 0 and 1 formed with the connection status between each output and all inputs to represent connection relations of the output; or

using 1 to represent connection, 0 to represent connectionless, and a character string of 0 and 1 formed with the connection status between each input and all outputs to represent connection relations of the input;

the second instance:
using a distance from a position of a first connection of an output to a first input neuron, a distance from a second input neuron of said output to a previous input neuron, a distance from a third input neuron of said output to a previous input neuron ... in a similar fashion, until all inputs of said output are exhausted, so as to represent connection relations of said output.

Step 2, multiply the input neurons and the weight data;

Step 3, perform an adder tree operation, perform a summation operation on the weighted output neurons obtained in step 1 by means of an adder tree stage-by-stage or add a bias to the output neurons to obtain biased output neurons; and

Step 4, execute an activation function operation to obtain final output neurons, wherein, said activation function may be sigmoid function, tanh function or ReLU function.

The following descriptions will further explain the technical solution claimed in the present invention with reference to the accompanying drawings and examples.

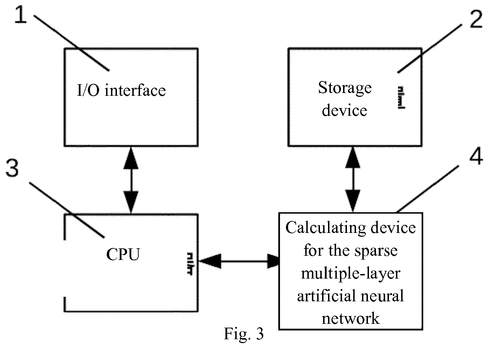

Fig. 3 is an exemplary block diagram of an overall structure according to one example of the present invention.

I/O interface 1 is used when I/O data need to be sent to the calculating device of the sparse multiple-layer artificial neural network through a CPU 3, and then to be written into the storage device by the calculating device 4 of the sparse multiple-layer artificial neural network; and specific programs as needed by the calculating device 4 of the sparse multiple-layer artificial neural network are transmitted by the CPU 3 to said device 4.

The storage device 2 is for temporarily storing the model and neuron data of the sparse multiple-layer artificial neural network, especially when not all of the models can be put in the cache of the calculating device 4 of the sparse multiple-layer artificial neural network.

A central processing unit (CPU) 3 is for performing basic controls such as data transportation and start/stop of the calculating device 4 of the sparse multiple-layer artificial neural network. Said CPU 3 acts as an interface between said calculating device 4 and an external control.

The calculating device 4 of the sparse artificial neural network, a unit for executing operations of the sparse multiple-layer artificial neural network, receives data and programs from the CPU 3, and executes the calculating algorithms of the above sparse multiple-layer artificial neural network. And execution results of the calculating device 4 of the sparse artificial neural network are transmitted back to the CPU 3.

A general-purpose system structure uses the calculating device 4 of the sparse artificial neural network as a co-processor of the CPU 3 or CPU to execute the calculating algorithms of the sparse multiple-layer artificial neural network.

A system structure of multiple interconnected calculating devices of the sparse artificial neural network: multiple calculating devices 4 of the sparse artificial neural network can be interconnected through PCIE bus so as to support a larger scale of sparse multiple-layer artificial neural network calculation, can share the same host CPU or have their own host CPU respectively, can share the memory or have their own memory for each accelerator. Besides, its interconnection mode can be any interconnection topology.

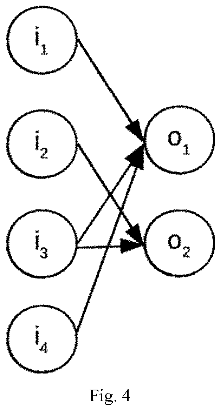

In respect of a sparsely connected neural network as shown in Fig. 4, there are four input neurons, i.e. $i_1$, $i_2$, $i_3$, and $i_4$; and two output neurons, i.e. $o_1$ and $o_2$, wherein $o_1$ is connected with $i_i$, $i_3$, and $i_4$, the weight values of the connections respectively expressed as $w_{11}$, wsi, and $w_{41}$; and $o_2$ is connected with $i_2$ and $i_3$, the weight values of the connections respectively expressed as $w_{22}$ and W32.

There are two ways to express the connection relations in the above sparse neural networks: one is to use one digit between each input neuron and each output neuron to represent whether or not there is connection therebetween, and the other is to use a distance between connections to represent the position of each connection.

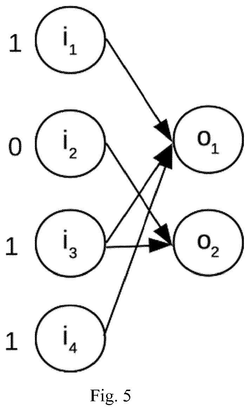

The first representation of connections:
Regarding the neural network in Fig. 4, as shown in Fig. 5, the connection relation of the output neuron $o_1$ is 1011, each digit representing whether or not there is connection with the input, 1 representing connection, and 0 representing connectionless; and then the connection relation of the output neuron $o_2$ is 0110. In the process of operation, the input neuron corresponding to a connection relation of 0 will not be calculated.

When storing the connection relations, they can be stored in order of priority of the input neuron or output neuron. The storage format specifically includes:
Format I: place all inputs of each output in turn, e.g. the sequence in the above example is 10110110.

Format II: place all outputs of each input in turn, e.g. the sequence in the above example is 10011110.

The second representation of connections:

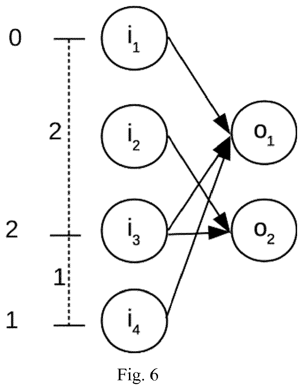

For example, regarding the neural network in Fig. 6, the output neuron $o_1$ is connected with the input neurons $i_1$, $i_3$, and $i_4$, and then the connection relations are 0, 2, 1, wherein 0 indicates that the distance between the position of the first connection and the first input neuron is 0, i.e. the first input neuron; 2 indicates that the distance between the second input neuron and the previous input neuron is 2, i.e. representing the third input neuron; and 1 indicates that the distance between the third input neuron and the previous one input neuron is 1, i.e. representing the fourth input neuron. Likewise, the connection relations of $o_2$ are 1, 1.

The mapping unit of the present invention includes but not limited to the above connection relations.

A convolution neural network is one type of artificial neural networks. A convolution layer includes multiple filters, i.e. convolution kernels. Such convolution kernels repeatedly act on all input images, and extract local features. Different convolution kernels can extract local features of different types. After passing through the convolution layer, one input image becomes some abstract features that can be better understood.

Natural images have their own inherent properties. In other words, the statistical property of a part of an image is as the same as the rest part, which means features learned from this part can be used in another part, so the same learned feature can be used in all the positions of the image. When a small block is randomly selected, for example, 8*8 as a sample, from a large-size image, and some features are learned in this small block sample, then the features learned in the 8*8 sample can serve as a detector to be applied to any position in the image. Particularly, a convolution operation can be performed to the features learned in the 8*8 sample and the original large-size image, thereby obtaining an activation value of a different feature from any position of the large-size image. And features of this 8*8 sample are regarded as convolution kernels.

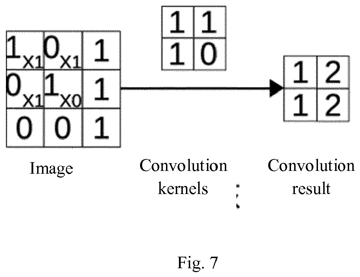

Fig. 7 is an example of a convolution operation, wherein the convolution kernel is a 2*2 matrix, and slides on the input image.

Provided that the convolution kernel slides by one pixel each time, then there will be four convolution operations in total. For each convolution operation, multiplication and addition operations are performed on the convolution kernel matrix and the corresponding input image data.

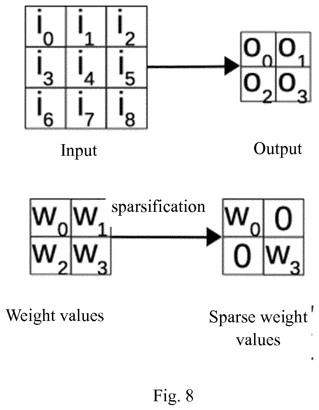

Provided that weight values of the convolution kernel become sparse, i.e. changing from the previous 2*2 into two parameters only, *see Fig. 8,* then, for the output $o_0$, the needed input neurons will be $i_0$, $i_1$, $i_3$, and $i_4$, the input weight values will be $w_0$ and ws, and the connection relation will be 1001 or 0, 2;
for the output $o_3$, the needed input neurons will be $i_3$, $i_5$, $i_7$, and $i_8$, the input weight values will be $w_0$ and ws, and the connection relation will be 1001 or 0, and 2.

Accordingly, for different output neurons in the same output feature map, the needed input neurons are different, while their weight values and connection relations are the same.

The calculating device of the artificial neural network that may execute a sparse connection can handle various sparsely connected artificial neural networks expressed by sparse connections, and there is a unit therein specially used for handling the sparse connections, called as a mapping unit herein. For different sparse connection relations and handling method, the structures of the calculating devices of artificial neural network operations are slightly different. Then, different structures and methods will be respectively described in the following contents.

## Structure & Method I

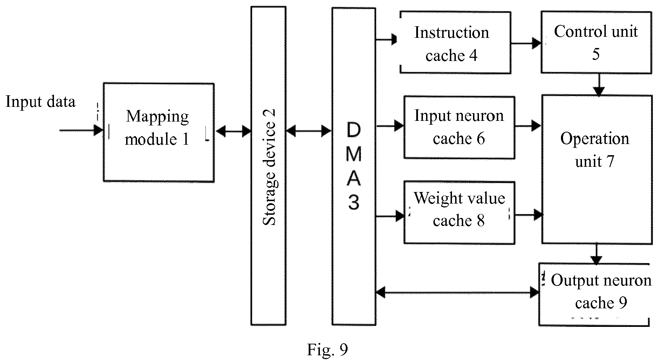

Fig. 9 shows a mapping unit 1 used for converting the input data into a storage mode in which the input neurons have one-to-one correspondence with the weight values.

A storage device 2 is used for storing data and instructions, especially when the neural network is on a large scale, and an instruction cache 4, an input neuron cache 6, and output neuron cache 9 and a weight value cache 8 cannot accommodate so many data, the data has to be temporarily stored in the storage device 2.

A DMA 3 is used for moving data or instructions in the storage device to respective caches.

An instruction cache 4 is used for storing special instructions.

A control unit 5 is used for reading the special instructions from the instruction cache 4, and decoding the same into various instructions for operation unit.

An input neuron cache 6 is used for storing the input neuron data for calculation;

An operation unit 7 is used for executing specific operations. The operation unit is mainly divided into three stages: the first stage to execute multiplication operations in which the input neurons are multiplied by the weight data; the second stage to execute an adder tree operation, wherein the first and second stages complete a vector inner-product operation in combination; and the third stage to execute an activation function operation, wherein the activation function may be sigmoid function, tanh function, etc. The output neurons obtained in the third stage are written back into the output neuron cache.

A weight value cache 8 is used for storing weight data.

An output neuron cache 9 is used for storing the output neurons for calculation.

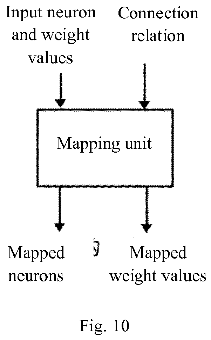

The structure of the mapping unit is illustrated in Fig. 10.

By taking the above sparsely connected neural network as an example, the connection relation may be either of the two sparse expressions as stated above. According to the connection relation, the mapping unit will output the mapped neurons and weight values from input neurons and input weight values. The mapped neurons and weight values may be directly used in the calculation without considering the connection relation. The specific process of mapping the output neuron $o_1$ is illustrated as follows:

The input neurons are ii, $i_2$, is and $i_4$; the input weight values are wn, wsi, and $w_{41}$, and the connection relation is 1011 or 0, 2, 1. According to the connection relation, the mapping unit changes the input neurons and weight values into a corresponding relation. There are two circumstances of the output: one to remove connectionless input neurons, then the mapped neurons being ii, $i_3$, and $i_4$, and the mapped weight values being $w_{11}$, wsi, and $w_{41}$; and the other to complement a weight of 0 in a connectionless position, then the mapped neurons being ii, $i_2$, $i_3$, and $i_4$, and the mapped weight values being $w_{11}$, 0, $w_{31}$, and $w_{41}$.

The operation unit is mainly divided into three parts: the first part is a multiplier; the second is an adder tree; and the third is a linear function unit. In the first part, the input neurons (in1) are multiplied by the weight values (w) to obtain weighted output neurons (out1), the process expressed as out1=w*in1; in the second part, stage-by-stage summation of those weighted output neurons is performed by means of an adder tree, furthermore a bias (b) may be added to the output neurons (out2) to obtain the biased output neurons (out3), the process expressed as out3= out2+b; and in the third part, an activation function (active) is applied to the weighted output neurons (out2 or out3) to obtain the activated output neurons (out4), the process expressed as out4=active(out2 or out3), wherein the activation function active may be sigmoid, tanh, relu, softmax, etc. In addition to the activation operation, the third part can perform other nonlinear functions, i.e. applying an operation (f) to out4 as a new input neuron to obtain the output neurons (out5), the process expressed as out5=f(out4).

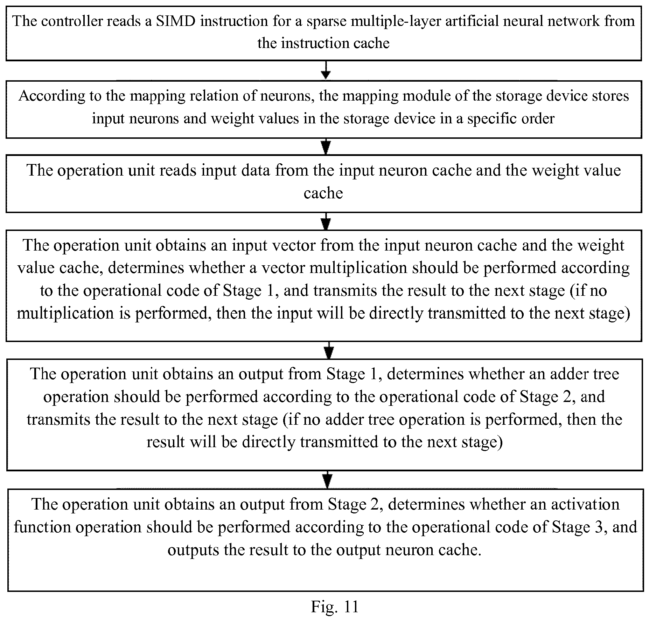

The operation process is shown in Fig. 11.

## Structure & Method II

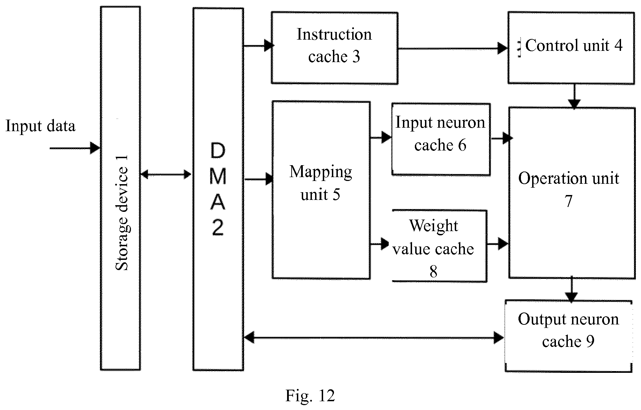

Fig. 12 shows a storage device 1 used for storing data and instructions, especially when the neural network is on a large scale, and an instruction cache 3, an input neuron cache 6, and output neuron cache 9 and a weight value cache 8 cannot accommodate so many data, the data has to be temporarily stored in the storage device 1.

A DMA 2 is used for moving data or instructions in the storage device to respective caches.

An instruction cache 3 is used for storing special instructions.

A control unit 4 is used for reading the special instructions from the instruction cache 3, and decoding the same into various instructions for the operation unit.

A mapping unit 5 is used for converting the input data into a storage mode in which the input neurons have one-to-one correspondence with the weight values.

An input neuron cache 6 is used for storing input neurons data for calculation.

An operation unit 7 is used for executing specific operations. The operation unit is mainly divided into three stages: the first stage to execute multiplication in which the input neurons are multiplied by the weight data; the second stage to execute an adder tree operation, wherein the first and second stages complete a vector inner-product operation in combination; and the third stage to execute an activation function operation, wherein the activation function may be sigmoid function, tanh function, etc. The output neurons obtained in the third stage are written back into the output neuron cache.

A weight value cache 8 is used for storing the weight data.

An output neuron cache 9 is used for storing the output neurons for calculation.

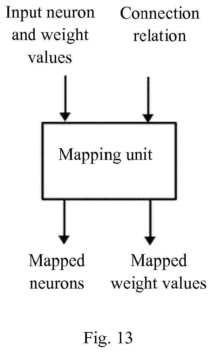

The structure of the mapping unit is illustrated in Fig. 13.

By taking the above sparsely connected neural network as an example, the connection relation may be either of the two sparse expressions as stated above. The mapping unit will map the input neurons and input weight values into the mapped neurons and weight values according to the connection relation and output the mapped neurons and weight values. The mapped neurons and weight values may be directly used in the calculation, without considering the connection relation. The specific process of mapping the output neuron $o_1$ is illustrated as follows:
The input neurons are ii, $i_2$, is and $i_4$; the input weight values are $w_{11}$, wsi, and $w_{41}$, and the connection relation is 1011 or 0, 2, 1. According to the connection relation, the mapping unit changes the input neurons and weight values into a corresponding relation. There are two circumstances of the output: one to remove connectionless input neurons, then the mapped neurons being ii, $i_3$, and $i_4$, and the mapped weight values being $w_{11}$, $w_{31}$, and $w_{41}$; and the other to complement a weight of 0 in a connectionless position, then the mapped neurons being ii, $i_2$, $i_3$, and $i_4$, and the mapped weight values being $w_{11}$, 0, $w_{31}$, and $w_{41}$.

The main distinction between the mapping units respectively in Structure &Method I and Structure &Method II is that the mapping unit of the former one maps the input neurons and weight values in advance prior to calculation, and then stores them in the storage device; while Structure &Method II performs mapping during the calculation, and directly sends the mapped data to the operation unit for calculation.

### Structure &Method III (not being part of the claimed invention)

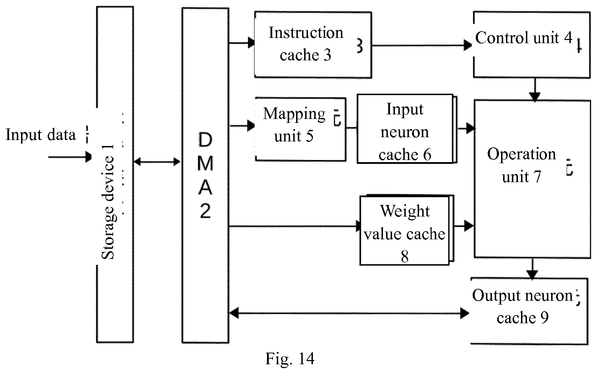

Based on Structure &Method II, a slight modification may be made so as to have a structure as shown in Fig. 14, wherein the mapping unit performs mapping only on the input neurons.

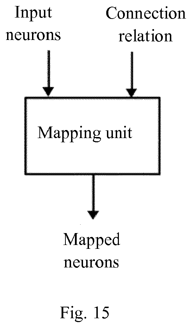

A structure diagram of the mapping unit is shown in Fig. 15.

The specific process of mapping the output neuron $o_1$ is described as below:
The input neurons are ii, $i_2$, is and $i_4$; and the connection relation is 1011 or 0, 2, 1. According to the connection relation, the mapping unit changes the input neurons and weight values into a corresponding relation, and removes those connectionless input neurons, so that the mapped neurons are ii, is and $i_4$.

### Structure &Method IV (not being part of the claimed invention)

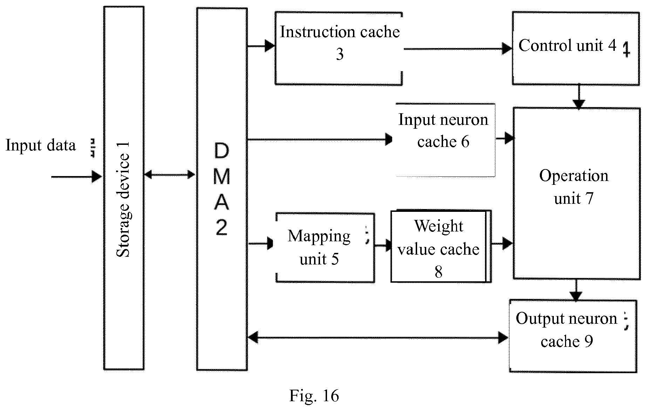

Based on Structure &Method-II, a slight modification may be made so as to have a structure as shown in Fig. 16, wherein the mapping unit performs mapping only on the input weight values.

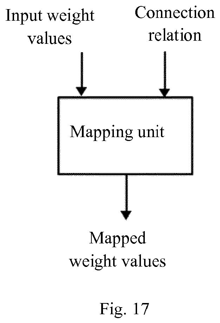

A structure diagram of the mapping unit is shown in Fig. 17.

The specific process of mapping the output neuron $o_1$ is described as below:
The input weight values are wn, wsi, and $w_{41}$; and the connection relation is 1011 or 0, 2, 1. According to the connection relation, the mapping unit changes the input neurons and weight values into a corresponding relation, so that the mapped weight values are $w_{11}$, 0, $w_{31}$ and $w_{41}$.

### Claims

1. A calculating device for a sparsely connected artificial neural network, comprising a mapping unit (1), a storage device (2) for storing data and instructions, an instruction cache (4), an input neuron cache (6), an output neuron cache (9), a weight value cache (8), an operation unit (7), and a DMA (3) for moving data or instructions in the storage device to respective caches,

   further comprising a control unit (5) wherein the control unit (5) is configured to read instructions from the instruction cache (4), and to decode the instructions into various instructions for operation unit (7),
   wherein the mapping unit (1) is configured to receive input data, wherein the input data comprise connection relation data for an output neuron, input neurons and weight values; wherein the connection relation data represent connecting relationships between input neurons and the output neuron in the sparsely connected artificial neural network;
   the mapping unit is configured to, based on the connection relation data, convert the input neurons into mapped input neurons, wherein the mapping unit is configured to remove input neurons which do not have any connection to the output neuron, according to the connection relation data, and thus obtain the mapped input neurons for the output neuron,

the mapping unit is connected to the storage device, and is configured to output the mapped input neurons and corresponding weight values to the storage device;

so that in the storage device, the mapped input neurons are stored in a storage mode in which the mapped input neurons have one-to-one correspondence with corresponding weight values;

the DMA is configured to move the mapped input neurons from the storage device to the input neuron cache, and to move the weight values from the storage device to the weight cache;

the input neuron cache (6) is located between the DMA (3) and the operation unit (7), and is configured to cache the mapped input neurons,

the weight value cache (8) is located between the DMA (3) and the operation unit (7), and is configured to cache weight values,

the operation unit (7) is configured to receive the mapped input neurons from the input neuron cache (6) and to receive corresponding weight values from the weight value cache (8), and to execute an operation directly on the mapped input neurons and the corresponding weight values, without receiving the connection relation data,

and the operation unit is configured to execute the operation according to the instructions from the control unit (5), so as to obtain the output neuron,

wherein the operation unit is configured to perform a three-step operation:

     step 1, multiply the input neurons and the weight values, to obtain weighted output neurons;

     step 2, execute an adder tree operation for performing, by means of an adder tree, a summation of the weighted output neurons processed by step 1 or add a bias to the output neuron to obtain biased output neuron; and

     step 3, execute an activation function operation, to obtain a final output neuron;

     the output neuron cache (9) is configured to store the output neuron output from the operation unit (7).

2.   A calculating device for a sparsely connected artificial neural network, comprising a mapping unit (5), a storage device (1) for storing data and instructions, an instruction cache (3), an input neuron cache (6), an output neuron cache (9), a weight value cache (8), an operation unit (7), and a DMA (2) for moving data or instructions in the storage device to respective caches,

further comprising a control unit (4) wherein the control unit (4) is configured to read instructions from the instruction cache (3), and to decode the instructions into various instructions for operation unit (7),

wherein the mapping unit (5) is configured to receive input data from the DMA (2), wherein the input data comprise connection relation data for an output neuron, input neurons and weight values; wherein the connection relation data represent connecting relationships between input neurons and the output neuron in the sparsely connected artificial neural network;

the mapping unit (5) is configured to, based on the connection relation data, convert the input neurons into mapped input neurons, wherein the mapping unit (5) is configured to remove input neurons which do not have any connection to the output neuron, according to the connection relation data, so as to obtain mapped input neurons;

the mapping unit (5) is connected to the input neuron cache (6) and connected to the weight value cache (8) and thus configured to

output the mapped input neurons to the input neuron cache (6), and output corresponding weight values to the weight value cache (8),

so that the mapped input neurons are stored in a storage mode in which the mapped input neurons in the input neuron cache have one-to-one correspondence with corresponding weight values in the weight value cache;

the input neuron cache (6) is located between the mapping unit (5) and the operation unit (7), and is configured to cache the mapped input neurons,

the weight value cache (8) is located between the mapping unit (5) and the operation unit (7), and is configured to cache weight values,

the operation unit (7) is configured to receive the mapped input neurons from the input neuron cache (6) and to receive corresponding weight values from the weight value cache (8), and to execute an operation directly on the mapped input neurons and the corresponding weight values, without receiving the connection relation data,

and the operation unit is configured to execute the operation according to the instructions from the control unit (5), so as to obtain the output neuron,

wherein the operation unit is configured to perform a three-step operation:

     step 1, multiply the input neurons and the weight values, to obtain weighted output neurons;

step 2, execute an adder tree operation for performing, by means of an adder tree, a summation of the weighted output neurons processed by step 1 or add a bias to the output neuron to obtain biased output neuron; and

step 3, execute an activation function operation, to obtain a final output neuron;

the output neuron cache (9) is configured to store the output neuron output from the operation unit (7).

3. The calculating device according to any preceding Claim, wherein the connection relation data are expressed in a first way or in a second way;

in the first way, the connection relation data are expressed by using one digit to represent whether or nor there is connection between each input neuron and the output neuron, wherein 1 represents that there is connection and 0 represents that there is no connection;

in the second way, the connection relation data are expressed by using distances of adjacent input neurons having connections to the output neuron, to represent the positions of input neurons having connection to the output neuron;

wherein a distance between two input neurons equals to a difference of positions of these two input neurons.

4. A sparse multiple-layer artificial neural network operation device comprising a calculating device according to any of Claims 1-3, further comprising:

a CPU or GPU used for transporting data, controlling said calculating device, and transmitting instructions to said calculating device; and

an I/O interface used for processing input/output of the CPU or GPU; said operation device used for receiving data or instructions of the CPU or GPU, executing sparse multiple-layer artificial neural network operation algorithms to obtain an execution result, and then transmitting the execution result to the CPU or GPU; and said storage unit further used for storing sparse multiple-layer artificial neural network models.

5. The sparse multiple-layer artificial neural network operation device according to Claim 4, comprising a plurality of the calculating devices.

6. The sparse multiple-layer artificial neural network operation device according to Claim 5, wherein the plurality of the calculating device, interconnected by a PCIE bus, share the same host CPU or GPU, or respectively have a corresponding host CPU or GPU.

## Patentansprüche

1. Rechenvorrichtung für ein spärlich verbundenes künstliches neuronales Netz, umfassend eine Abbildungseinheit (1), eine Speichervorrichtung (2) zum Speichern von Daten und Anweisungen, einen Anweisungs-Cache (4), einen Eingabeneuronen-Cache (6), einen Ausgabeneuronen-Cache (9), einen Gewichtungswert-Cache (8), eine Operationseinheit (7) und einen DMA (3) zum Bewegen von Daten oder Anweisungen in der Speichervorrichtung in jeweilige Caches,

ferner umfassend eine Steuereinheit (5), wobei die Steuereinheit (5) dazu konfiguriert ist, Anweisungen aus dem Anweisungs-Cache (4) zu lesen und die Anweisungen in verschiedene Anweisungen für die Operationseinheit (7) zu dekodieren,

wobei die Abbildungseinheit (1) zum Empfangen von Eingabedaten konfiguriert ist, wobei die Eingabedaten Verbindungsbeziehungsdaten für ein Ausgabeneuron, Eingabeneuronen und Gewichtungswerte umfassen; wobei die Verbindungsbeziehungsdaten Verbindungsbeziehungen zwischen Eingabeneuronen und dem Ausgabeneuron in dem spärlich verbundenen künstlichen neuronalen Netz darstellen;

die Abbildungseinheit dazu konfiguriert ist, basierend auf den Verbindungsbeziehungsdaten die Eingabeneuronen in abgebildete Eingabeneuronen umzuwandeln, wobei

die Abbildungseinheit dazu konfiguriert ist, Eingangsneuronen zu entfernen, die gemäß den Verbindungsbeziehungsdaten keine Verbindung zu dem Ausgangsneuron aufweisen, und so die abgebildeten Eingangsneuronen für das Ausgangsneuron zu erhalten,

die Abbildungseinheit mit der Speichervorrichtung verbunden ist und dazu konfiguriert ist, die abgebildeten Eingabeneuronen und entsprechende Gewichtungswerte an die Speichervorrichtung auszugeben;

so dass in der Speichervorrichtung die abgebildeten Eingabeneuronen in einem Speichermodus gespeichert werden, in dem die abgebildeten Eingabeneuronen eine Eins-zu-eins-Entsprechung mit entsprechenden Gewichtungswerten aufweisen;

der DMA dazu konfiguriert ist, die abgebildeten Eingabeneuronen von der Speichervorrichtung in den Eingabeneuronen-Cache zu bewegen und die Gewichtungswerte von der Speichervorrichtung in den Gewichtungs-Cache zu bewegen;

der Eingabeneuronen-Cache (6) sich zwischen dem DMA (3) und der Operationseinheit (7) befindet und dazu konfiguriert ist, die abgebildeten Eingabeneuronen zu cachen,

der Gewichtungswert-Cache (8) sich zwischen dem DMA (3) und der Operationseinheit (7) befindet und dazu konfiguriert ist, Gewichtungswerte zu cachen,

die Operationseinheit (7) dazu konfiguriert ist, die abgebildeten Eingabeneuronen von dem Eingabeneuronen-Cache (6) zu empfangen und entsprechende Gewichtungswerte von dem Gewichtungswert-Cache (8) zu empfangen und eine Operation direkt an den abgebildeten Eingabeneuronen und den entsprechenden Gewichtungswerten auszuführen, ohne die Verbindungsbeziehungsdaten zu empfangen,

und die Operationseinheit dazu konfiguriert ist, die Operation gemäß den Anweisungen von der Steuereinheit (5) auszuführen, um das Ausgabeneuron zu erhalten,

wobei die Operationseinheit dazu konfiguriert ist, eine dreistufige Operation durchzuführen:

Stufe 1, Multiplizieren der Eingabeneuronen und der Gewichtungswerte, um gewichtete Ausgabeneuronen zu erhalten;

Stufe 2, Ausführen einer Addierbaumoperation zum Durchführen einer Summierung der in Schritt 1 verarbeiteten gewichteten Ausgabeneuronen mithilfe eines Addierbaums oder Hinzufügen eines Bias zu dem Ausgabeneuron, um ein Ausgabeneuron mit Bias zu erhalten; und

Schritt 3, Ausführen einer Aktivierungsfunktionsoperation, um ein finales Ausgabeneuron zu erhalten;

wobei der Ausgabeneuronen-Cache (9) dazu konfiguriert ist, die Ausgabeneuronenausgabe von der Operationseinheit (7) zu speichern.

2. Rechenvorrichtung für ein spärlich verbundenes künstliches neuronales Netz, umfassend eine Abbildungseinheit (5), eine Speichervorrichtung (1) zum Speichern von Daten und Anweisungen, einen Anweisungs-Cache (3), einen Eingabeneuronen-Cache (6), einen Ausgabeneuronen-Cache (9), einen Gewichtungswert-Cache (8), eine Operationseinheit (7) und einen DMA (2) zum Bewegen von Daten oder Anweisungen in der Speichervorrichtung in jeweilige Caches,

ferner umfassend eine Steuereinheit (4), wobei die Steuereinheit (4) dazu konfiguriert ist, Anweisungen aus dem Anweisungs-Cache (3) zu lesen und die Anweisungen in verschiedene Anweisungen für die Operationseinheit (7) zu dekodieren,

wobei die Abbildungseinheit (5) zum Empfangen von Eingabedaten von dem DMA (2) konfiguriert ist, wobei die Eingabedaten Verbindungsbeziehungsdaten für ein Ausgabeneuron, Eingabeneuronen und Gewichtungswerte umfassen; wobei die Verbindungsbeziehungsdaten Verbindungsbeziehungen zwischen Eingabeneuronen und dem Ausgabeneuron in dem spärlich verbundenen künstlichen neuronalen Netz darstellen;

die Abbildungseinheit (5) dazu konfiguriert ist, basierend auf den Verbindungsbeziehungsdaten die Eingabeneuronen in abgebildete Eingabeneuronen umzuwandeln, wobei

die Abbildungseinheit (5) dazu konfiguriert ist, Eingangsneuronen zu entfernen, die gemäß den Verbindungsbeziehungsdaten keine Verbindung zu dem Ausgangsneuron aufweisen, um so abgebildete Eingangsneuronen zu erhalten;

die Abbildungseinheit (5) mit dem Eingabeneuronen-Cache (6) verbunden und mit dem Gewichtungswert-Cache (8) verbunden ist und somit dazu konfiguriert ist,

die abgebildeten Neuronen in den Eingabeneuronen-Cache (6) auszugeben und entsprechende Gewichtungswerte in den Gewichtungswert-Cache (8) auszugeben,

so dass die abgebildeten Eingabeneuronen in einem Speichermodus gespeichert werden, in dem die abgebildeten Eingabeneuronen in dem Eingabeneuronen-Cache eine Eins-zu-eins-Entsprechung mit entsprechenden Gewichtungswerten in dem Gewichtungswert-Cache aufweisen,

der Eingabeneuronen-Cache (6) sich zwischen der Abbildungseinheit (5) und der Operationseinheit (7) befindet und dazu konfiguriert ist, die abgebildeten Eingabeneuronen zu cachen,

der Gewichtungswert-Cache (8) sich zwischen der Abbildungseinheit (5) und der Operationseinheit (7) befindet und dazu konfiguriert ist, Gewichtungswerte zu cachen,

die Operationseinheit (7) dazu konfiguriert ist, die abgebildeten Eingabeneuronen von dem Eingabeneuronen-Cache (6) zu empfangen und entsprechende Gewichtungswerte von dem Gewichtungswert-Cache (8) zu empfangen und eine Operation direkt an den abgebildeten Eingabeneuronen und den entsprechenden Gewichtungswerten auszuführen, ohne die Verbindungsbeziehungsdaten zu empfangen,

und die Operationseinheit dazu konfiguriert ist, die Operation gemäß den Anweisungen von der Steuereinheit (5) auszuführen, um das Ausgabeneuron zu erhalten,

wobei die Operationseinheit dazu konfiguriert ist, eine dreistufige Operation durchzuführen:

Stufe 1, Multiplizieren der Eingabeneuronen und der Gewichtungswerte, um gewichtete Ausgabeneuronen zu erhalten;
Stufe 2, Ausführen einer Addierbaumoperation zum Durchführen einer Summierung der in Schritt 1 verarbeiteten gewichteten Ausgabeneuronen mithilfe eines Addierbaums oder Hinzufügen eines Bias zu dem Ausgabeneuron, um ein Ausgabeneuron mit Bias zu erhalten; und
Stufe 3, Ausführen einer Aktivierungsfunktionsoperation, um ein finales Ausgabeneuron zu erhalten;
wobei der Ausgabeneuronen-Cache (9) dazu konfiguriert ist, die Ausgabeneuronenausgabe von der Operationseinheit (7) zu speichern.

3. Rechenvorrichtung nach einem vorhergehenden Anspruch, wobei die Verbindungsbeziehungsdaten auf eine erste Weise oder auf eine zweite Weise ausgedrückt werden;

wobei bei der ersten Weise die Verbindungsbeziehungsdaten ausgedrückt werden, indem eine Ziffer verwendet wird, um darzustellen, ob zwischen jedem Eingabeneuron und dem Ausgabeneuron eine Verbindung besteht oder nicht, wobei 1 darstellt, dass eine Verbindung besteht, und 0 darstellt, dass keine Verbindung besteht;
wobei bei der zweiten Weise die Verbindungsbeziehungsdaten ausgedrückt werden, indem Abstände benachbarter Eingabeneuronen verwendet werden, die Verbindungen zu dem Ausgabeneuron aufweisen, um die Positionen von Eingabeneuronen darzustellen, die eine Verbindung zu dem Ausgabeneuron aufweisen;
wobei ein Abstand zwischen zwei Eingabeneuronen gleich einem Unterschied der Positionen dieser beiden Eingabeneuronen ist.

4. Operationsvorrichtung eines spärlichen mehrschichtigen künstlichen neuronalen Netzes, die eine Rechenvorrichtung nach einem der Ansprüche 1-3 umfasst, ferner umfassend:

eine CPU oder GPU, die zum Transportieren von Daten, zum Steuern der Rechenvorrichtung und zum Übertragen von Anweisungen an die Rechenvorrichtung verwendet wird; und
eine PO-Schnittstelle, die zum Verarbeiten der Eingabe/Ausgabe der CPU oder GPU verwendet wird; wobei die Operationsvorrichtung dazu verwendet wird, Daten oder Anweisungen der CPU oder GPU zu empfangen, Operationsalgorithmen des spärlichen mehrschichtigen künstlichen neuronalen Netzes auszuführen, um ein Ausführungsergebnis zu erhalten, und dann das Ausführungsergebnis an die CPU oder GPU zu übertragen; und wobei die Speichereinheit ferner zum Speichern von Modellen des spärlichen mehrschichtigen künstlichen neuronalen Netzes verwendet wird.

5. Operationsvorrichtung eines spärlichen mehrschichtigen künstlichen neuronalen Netzes nach Anspruch 4, eine Vielzahl der Rechenvorrichtungen umfassend.

6. Operationsvorrichtung eines spärlichen mehrschichtigen künstlichen neuronalen Netzes nach Anspruch 5, wobei die Vielzahl der Rechenvorrichtungen, die über einen PCIE-Bus miteinander verbunden sind, sich die gleiche Host-CPU oder -GPU teilen oder jeweils eine entsprechende Host-CPU oder -GPU aufweisen.

**Revendications**

1. Dispositif de calcul pour un réseau neuronal artificiel à connexions éparses, comprenant une unité de mappage (1), un dispositif de stockage (2) destiné à stocker des données et des instructions, une mémoire cache d'instructions (4), une mémoire cache de neurones d'entrée (6), une mémoire cache de neurones de sortie (9), une mémoire cache de valeurs pondérales (8), une unité d'opération (7) et un DMA (3) destiné à déplacer des données ou des instructions dans le dispositif de stockage vers des mémoires caches respectives,

comprenant en outre une unité de commande (5), ladite unité de commande (5) étant configurée pour lire des instructions de la mémoire cache d'instructions (4) et pour décoder les instructions en diverses instructions pour l'unité d'opération (7),
ladite unité de mappage (1) étant configurée pour recevoir des données d'entrée, lesdites données d'entrée comprenant des données de relations de connexion pour un neurone de sortie, des neurones d'entrée et des valeurs pondérales ; lesdites données de relations de connexion représentant des relations de connexion entre les neurones d'entrée et le neurone de sortie dans le réseau neuronal artificiel à connexions éparses ;
ladite unité de mappage étant configurée pour, sur la base des données de relations de connexion, convertir les neurones d'entrée en neurones d'entrée mappés,

ladite unité de mappage étant configurée pour supprimer les neurones d'entrée qui n'ont aucune connexion avec le neurone de sortie, selon les données de relations de connexion, et obtenir ainsi les neurones d'entrée mappés pour le neurone de sortie,

ladite unité de mappage étant connectée au dispositif de stockage, et étant configurée pour délivrer les neurones d'entrée mappés et les valeurs pondérales correspondantes au dispositif de stockage ;

de sorte que dans le dispositif de stockage, les neurones d'entrée mappés sont stockés dans un mode de stockage dans lequel les neurones d'entrée mappés présentent une correspondance un à un avec des valeurs pondérales correspondantes ;

ledit DMA étant configuré pour déplacer les neurones d'entrée mappés du dispositif de stockage vers la mémoire cache de neurones d'entrée et pour déplacer les valeurs pondérales du dispositif de stockage vers la mémoire cache de valeurs pondérales ;

ladite mémoire cache de neurones d'entrée (6) se trouvant entre le DMA (3) et l'unité d'opération (7) et étant configuré pour mettre en mémoire cache les neurones d'entrée mappés,

ladite mémoire cache de valeurs pondérales (8) se trouvant entre le DMA (3) et l'unité d'opération (7), et étant configuré pour mettre en mémoire cache des valeurs pondérales,

ladite unité d'opération (7) étant configurée pour recevoir les neurones d'entrée mappés de la mémoire cache de neurones d'entrée (6) et pour recevoir des valeurs pondérales correspondantes de la mémoire cache de valeurs pondérales (8), et pour exécuter une opération directement sur les neurones d'entrée mappés et les valeurs pondérales correspondantes, sans recevoir les données de relations de connexion,

et ladite unité d'opération étant configurée pour exécuter l'opération selon les instructions de l'unité de commande (5), de manière à obtenir le neurone de sortie,

ladite unité d'opération étant configurée pour effectuer une opération à trois étapes :

étape 1, multiplication des neurones d'entrée et des valeurs pondérales, pour obtenir des neurones de sortie pondérés ;

étape 2, exécution d'une opération d'arbre d'additionneurs pour effectuer, au moyen d'un arbre d'additionneurs, une sommation des neurones de sortie pondérés traités par l'étape 1 ou addition d'un biais au neurone de sortie pour obtenir un neurone de sortie biaisé ; et

étape 3, exécution d'une opération de fonction d'activation, pour obtenir un neurone de sortie final ;

ladite mémoire cache de neurones de sortie (9) étant configurée pour stocker le neurone de sortie de l'unité d'opération (7).

2. Dispositif de calcul pour un réseau neuronal artificiel à connexion éparses, comprenant une unité de mappage (5), un dispositif de stockage (1) destiné à stocker des données et des instructions, une mémoire cache d'instructions (3), une mémoire cache de neurones d'entrée (6), une mémoire cache de neurones de sortie (9), une mémoire cache de valeurs pondérales (8), une unité d'opération (7) et un DMA (2) destiné à déplacer des données ou des instructions dans le dispositif de stockage vers des mémoires caches respectives,

comprenant en outre une unité de commande (4), ladite unité de commande (4) étant configurée pour lire des instructions à partir de la mémoire cache d'instructions (3) et pour décoder les instructions en diverses instructions pour l'unité d'opération (7),

ladite unité de mappage (5) étant configurée pour recevoir des données d'entrée du DMA (2), lesdites données d'entrée comprenant des données de relations de connexion pour un neurone de sortie, des neurones d'entrée et des valeurs pondérales ; lesdites données de relations de connexion représentant des relations de connexion entre des neurones d'entrée et le neurone de sortie dans le réseau neuronal artificiel à connexions éparses ;

ladite unité de mappage (5) étant configurée pour, sur la base des données de relations de connexion, convertir les neurones d'entrée en neurones d'entrée mappés,

ladite unité de mappage (5) étant configurée pour supprimer les neurones d'entrée qui n'ont aucune connexion avec le neurone de sortie, selon les données de relations de connexion, de manière à obtenir des neurones d'entrée mappés ;

ladite unité de mappage (5) étant connectée à la mémoire cache de neurones d'entrée (6) et connectée à la mémoire cache de valeurs pondérales (8) et ainsi configurée pour délivrer les neurones d'entrée mappés à la mémoire cache de neurones d'entrée (6) et délivrer les valeurs pondérales correspondantes à la mémoire cache de valeurs pondérales (8),

de sorte que les neurones d'entrée mappés soient stockés dans un mode de stockage dans lequel les neurones d'entrée mappés dans la mémoire cache de neurones d'entrée présentent une correspondance un à un avec des valeurs pondérales correspondantes dans la mémoire cache de valeurs pondérales ;

ladite mémoire cache de neurones d'entrée (6) se trouvant entre l'unité de mappage (5) et l'unité d'opération (7), et étant configurée pour mettre en mémoire cache les neurones d'entrée mappés,

ladite mémoire cache de valeur pondérales (8) se trouvant entre l'unité de mappage (5) et l'unité d'opération (7), et étant configurée pour mettre en mémoire cache les valeurs pondérales,

ladite unité d'opération (7) étant configurée pour recevoir les neurones d'entrée mappés de la mémoire cache de neurones d'entrée (6) et pour recevoir des valeurs pondérales correspondantes de la mémoire cache de valeurs pondérales (8), et pour exécuter une opération directement sur les neurones d'entrée mappés et les valeurs pondérales correspondantes, sans recevoir les données de relations de connexion,

et ladite unité d'opération étant configurée pour exécuter l'opération selon les instructions de l'unité de commande (5), de manière à obtenir le neurone de sortie,

ladite unité d'opération étant configurée pour effectuer une opération à trois étapes :

étape 1, multiplication des neurones d'entrée et des valeurs pondérales, pour obtenir des neurones de sortie pondérés ;

étape 2, exécution d'une opération d'arbre d'additionneurs pour effectuer, au moyen d'un arbre d'additionneurs, une sommation des neurones de sortie pondérés traités par l'étape 1 ou addition d'un biais au neurone de sortie pour obtenir un neurone de sortie biaisé ; et

étape 3, exécution d'une opération de fonction d'activation, pour obtenir un neurone de sortie final ;

ladite mémoire cache de neurones de sortie (9) étant configurée pour stocker le neurone de sortie de l'unité d'opération (7).

3. Dispositif de calcul selon l'une quelconque des revendications précédentes, lesdites données de relations de connexion étant exprimées d'une première manière ou d'une seconde manière ;

dans la première manière, lesdites données de relations de connexion étant exprimées en utilisant un chiffre pour représenter l'existence ou non d'une connexion entre chaque neurone d'entrée et le neurone de sortie, 1 représentant l'existence d'une connexion et 0 représentant l'absence d'une connexion ;

dans la seconde manière, lesdites données de relations de connexion étant exprimées en utilisant les distances des neurones d'entrée adjacents comportant des connexions au neurone de sortie, pour représenter les positions des neurones d'entrée comportant une connexion au neurone de sortie ;

la distance entre deux neurones d'entrée étant égale à la différence de positions de ces deux neurones d'entrée.

4. Dispositif d'opération de réseau neuronal artificiel multicouche épars comprenant un dispositif de calcul selon l'une quelconque des revendications 1 à 3, comprenant en outre :

une CPU ou une GPU utilisée pour transporter des données, commander ledit dispositif de calcul et transmettre des instructions audit dispositif de calcul ; et

une interface d'E/S utilisée pour traiter les entrées/sorties de la CPU ou de la GPU ; ledit dispositif d'opération utilisé pour recevoir les données ou les instructions de la CPU ou de la GPU, exécuter des algorithmes d'opération de réseau neuronal artificiel multicouche épars pour obtenir un résultat d'exécution, et ensuite transmettre le résultat d'exécution à la CPU ou à la GPU ; et ladite unité de stockage étant en outre utilisée pour stocker des modèles de réseaux neuronaux artificiels multicouches épars.

5. Dispositif d'opération de réseau neuronal artificiel multicouche épars selon la revendication 4, comprenant une pluralité de dispositifs de calcul.

6. Dispositif d'opération de réseau neuronal artificiel multicouche épars selon la revendication 5, ladite pluralité de dispositifs de calcul, interconnectés par un bus PCIE, partageant la même CPU ou GPU hôte, ou comportant respectivement une CPU ou GPU hôte correspondante.

Fig.1

Fig. 2

1

I/O interface

2

Storage
device

3

CPU

4

Calculating device
for the sparse
multiple-layer
artificial neural
network

Fig. 3

Fig. 4

Fig. 5

Fig. 6

Image      Convolution      Convolution
kernels      result

Fig. 7

Input          Output

sparsification

Weight values          Sparse weight values

Fig. 8

Input data

Mapping module 1

Storage device 2

D M A 3

Instruction cache 4

Control unit 5

Input neuron cache 6

Operation unit 7

Weight value cache 8

Output neuron cache 9

Fig. 9

Input neuron
and weight
values

Connection
relation

Mapping unit

Mapped
neurons

Mapped
weight values

Fig. 10

The controller reads a SIMD instruction for a sparse multiple-layer artificial neural network from the instruction cache

↓

According to the mapping relation of neurons, the mapping module of the storage device stores input neurons and weight values in the storage device in a specific order

↓

The operation unit reads input data from the input neuron cache and the weight value cache

↓

The operation unit obtains an input vector from the input neuron cache and the weight value cache, determines whether a vector multiplication should be performed according to the operational code of Stage 1, and transmits the result to the next stage (if no multiplication is performed, then the input will be directly transmitted to the next stage)

↓

The operation unit obtains an output from Stage 1, determines whether an adder tree operation should be performed according to the operational code of Stage 2, and transmits the result to the next stage (if no adder tree operation is performed, then the result will be directly transmitted to the next stage)

↓

The operation unit obtains an output from Stage 2, determines whether an activation function operation should be performed according to the operational code of Stage 3, and outputs the result to the output neuron cache.

Fig. 11

Fig. 12

Input neuron
and weight
values

Connection
relation

Mapping unit

Mapped
neurons

Mapped
weight values

Fig. 13

Fig. 14

Input        Connection
neurons       relation

Mapping unit

Mapped
neurons

Fig. 15

Fig. 16

Input weight        Connection
values               relation

Mapping unit

Mapped
weight values

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5517596 A